# FASCICULE DE BREVET EUROPEEN

(11) **EP 0 349 383 B1**
(45) Date de publication et mention de la délivrance du brevet: **28.04.1993**
(21) Numéro de dépôt: 89401750.8
(22) Date de dépôt: 21.06.1989
(51) Int. Cl.: C08F 2/24

(54) **Procédé de polymérisation en émulsion de monomères vinyliques**
Emulsionspolymerisationsverfahren von Vinylmonomeren
Process for the emulsionpolymerisation of vinyl monomers

(30) Priorité: 29.06.1988 IT 2115388
(43) Date de publication de la demande: 03.01.1990
(73) Titulaire: RHONE-POULENC GERONAZZO S.p.A., 20021 Ospiate di Bollate Milano (IT)
(72) Inventeur: Fiard, Jean-François, F-75020 Paris (FR)
(74) Mandataire: Seugnet, Jean Louis

(56) Documents cités:
- FR-A- 1 344 971
- US-A- 2 840 549

## Description

La présente invention a pour objet un procédé de polymérisation en émulsion de monomères vinyliques permettant d'obtenir des latex de polymères présentant un faible taux de résidus à la filtration.

La demanderesse a trouvé un procédé de préparation de latex de polymères dérivés de monomères vinyliques, présentant un taux de résidus à la filtration inférieur à 300 ppm et un taux de croûtes sur les parois inférieur à 600 ppm.

Le procédé faisant l'objet de l'invention est un procédé de polymérisation en émulsion d'au moins un monomère vinylique non ionogène en présence d'un émulsifiant et d'un amorceur de polymérisation, caractérisé en ce que ledit agent émulsifiant contient un composé non-ionique ou anionique de formule : 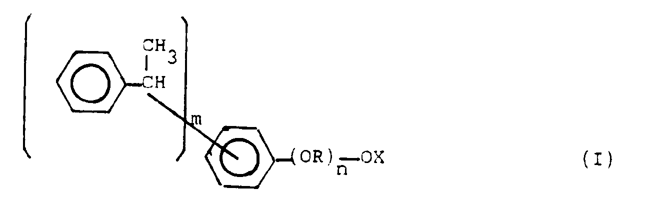
où m est égal à 2 ou 3
- n va de 6 à 50
- R est un radical éthylène et/ou propylène
- X représente :
   . un atome d'hydrogène
   . un groupe - SO₃M, où le symbole M est un reste ammonium ou un atome de métal alcalin.

Parmi les symboles M on peut citer les atomes de sodium, de potassium, le radical ammonium, la monoethanolamine, la diethanslamine, la triethanolamine.

Parmi les monomères vinyliques non ionogènes pouvant être mis en oeuvre, on peut citer :
- les monomères vinylaromatiques tels que : styrène vinyltoluène, éthylvinylbenzène;
- les esters, amides, nitriles de l'acide (meth)acrylique tels que : les (meth)acylates d'alkyle dont le radical alkyle est en C₁ - C₁₂ comme le méthacrylate de méthyle, l'acrylate de butyle, l'acrylate de 2-éthylhexyle; le (meth)acrylamide ; le (meth)acrylonitrile;
- les esters vinyliques d'acides carboxyliques saturés tels que acétate de vinyle, le propionate de vinyle , le "versatate" de vinyle (mélange d'esters d'acides ramifiés en C₉ à C₁₁);

La composition monomère à polymériser peut éventuellement contenir :
- jusqu'à 50 % en poids d'au moins un monomère ionogène
- et/ou de 0 à 10 % d'un monomère réticulant.

Parmi les monomères ionogènes on peut citer les acides : acrylique, méthacrylique, crotonique, maleïque, fumarique, itaconique, mésaconique, glutaconique... et leurs dérivés chlorés ; les monomères sulfonés copolymérisables (vinylsulfonate de sodium) ; les sels d'onium polycoordiné copolymerisables (chlorure de triméthylaminoéthylacrylamide, le chlorure de triméthylaminopropylméthacrylate, le bromure de 1-méthyl 2-vinylpyridinium, le bromure de triméthylvinylphosphonium)

Parmi les monomères réticulants on peut citer : le divinyl benzène, le méthylène - bis(acrylamide), l'acide - bis(acrylamido) acétique, le diméthacrylate d'éthylène glycol, le N-méthylolméthacrylamide.

Les émulsifiants préférentiellement mis en oeuvre sont ceux de formule I dans laquelle :
- m est égal à 2 ou 3
- n est un nombre allant de 7 à 16
- R est un radical éthylène
- M est un reste ammonium.

Parmi ces émulsifiants on peut citer tout particulièrement :
- les tri-(phényl-1 éthyl) phénols polyoxyéthylénés ayant de 16 à 20 motifs d'oxyde d'éthylène par mole de phénol
- les sulfates de di- ou tri- (phényl-1 éthyl) phénols polyoxyéthylénés ayant de 7 à 16 motifs d'oxyde d'éthylène par mole de phénol, neutralisés par de l'ammoniac.

L'émulsifiant de formule I peut être mis en oeuvre en quantité allant de 0,3 à 2 % en poids, de préférence de 0,4 à 1,5 % en poids par rapport au poids de monomère (s).

Celui-ci est de préférence accompagné d'au moins d'un agent émulsifiant classique compatible anionique, cationique, non ionique ou amphotère, tel que : les sels d'acides gras, les alkylsulfates, les alkylsulfonates, les alkylarylsulfonates, les sulfosuccinates, les alkylphosphates de métaux alcalins : le décylammonium méthylsulfate, le bromure de N-éthyldodécylammonium, le chlorure ou bromure de cétylammonium, le bromure de stéarylammonium, le bromure de cétyldiméthylbenzylammonium, le chlorure de N,N-diméthyldodécylammonium, l'iodure de N-méthyltridécylammonium, les chlorures, bromures, sulfates méthylsulfates ou acétates d'amines grasses éthoxylées, les esters gras de polyalcools, les alcanolamides d'acides gras, les polyoxydes d'éthylène, les copolyoxydes d'éthylène et de propylène, les alcools et alkylphénols s oxyéthylénés, les alcools et alkylphénols oxyéthylénés et sulfatés.

La quantité totale d'émulsifiants mise en oeuvre est généralement de l'ordre de 0,4 à 4 %, de préférence de l'ordre de 0,6 à 2 % en poids par rapport au poids de monomère (s).

L'opération de polymérisation peut être réalisée à une température de l'ordre de 60 à 90°C, généralement de l'ordre de 65 à 85°C en présence d'un amorceur hydrosoluble ou hydrodispersable et éventuellement d'un agent limiteur de chaîne.

Parmi les amorceurs pouvant être mis en oeuvre on peut citer : l'eau oxygénée, l'hydropéroxyde de cumène, l'hydropéroxyde de tertiobutyle, l'hydropéroxyde de diisopropylbenzène, le péroxyde de benzoyle, de diisopropylbenzène, de méthyléthylacétone, les persulfates tels que le persulfate de sodium, potassium ou ammonium ; les systèmes redox en associant auxdits péroxydes, hydropéroxydes ou persulfates un réducteur tel que l'acide ascorbique, les sucres, les sels métalliques polyvalents, les sulfites, hydrosulfites, sulfoxalates, thiosulfates, biosulfites de sodium ; les composés azoaliphatiques tels que l'azo-bisisobutyronitrile.

Ceux-ci sont mis en oeuvre à raison 0,1 à 5 % en poids, de préférence 0,1 à 2 % par rapport au poids de monomère(s).

L'agent limiteur de chaîne peut éventuellement être mis en oeuvre dans des proportions allant de 0 à 3 % par rapport aux monomères. Il est généralement choisi parmi : les mercaptans tels que le N-dodécylmercaptan, le tertiododécylmercaptan ; le cyclohéxène ; les hydrocarbures halogénés tels que le chloroforme, le bromoforme, le tétra chlorure de carbone, le tétra bromure de carbone ; les dimères de l' α méthylstyrène.

Les latex obtenus selon le procédé de l'invention présentent un extrait sec de l'ordre de 30 à 60 % en poids. Ils présentent un taux de résidus à la filtration inférieur à 300 ppm ; la filtrabilité de tels produits est donc particulièrement élevée. Ils peuvent être utilisés comme liants pour le couchage du papier, pour la fabrication de peintures, colles, voiles de non-tissés, adhésifs de contact...

Les exemples suivants sont donnés à titre indicatif et ne peuvent être considérés comme une limite du domaine et de l'esprit de l'invention.

### Exemple 1

On introduit dans un réacteur de 2 litres :
- 378 g d'eau désionisée
- 1,3 g de laurylsulfate de sodium
- 1 g de pyrophosphate de sodium, 10 H₂0 dans 2 g d'eau
- 2,5 g d'acrylamide
- 76 g d'un mélange constitué de
   . 46,50 parties en poids de styrène
   . 50 parties en poids d'acrylate de butyle
   . 3 parties en poids d'acide acrylique
- 7,3 g de persulfate de potassium dans 104 g d'eau.

Le milieu est porté en 1 heure à 75°C puis on commence à ajouter en continu pendant 5 heures à 75°C 426 g du mélange constitué de :
. 46,50 parties en poids de styrène
. 50 parties en poids d'acrylate de butyle
. 3 parties en poids d'acide acrylique.

Une heure après le début de la polymérisation à 75°C on introduit en continu 5 g de tri(phényl-1 éthyl) phénol éthoxylé à 16 motifs d'oxyde d'éthylène (16 OE), dilué dans 10 g d'eau.

Après la fin de la polymérisation, le réacteur est maintenu pendant encore 2 heures à 75°C, puis est refroidi jusqu'à la température ordinaire.

On obtient ainsi un latex présentant les caractéristiques suivantes :
- taux d'extrait sec 50 % envrion
- pH 3 environ
- viscosité 215 mPa.s
   (Brookfield RVT 50 Tr/mn 20°C)
- diamètre des particules 0,13 µm
- taux de grains 115 ppm.
- taux de croûtes sur les parois 300 ppm.

Le taux de grains est mesuré par filtration de l'ensemble du latex sur une toile de 75 µm et séchage pendant 1 heure environ à 120°C jusqu'à obtention d'un poids constant.

Si l'on répète l'opération ci-dessus décrite en remplaçant le tri(phényl-1 éthyl) phénol éthoxylé à 16 OE par la même quantité de nonylphénol éthoxylé à 9 OE de HLB voisin, on constate que le taux de grains est de 1060 ppm.

### Exemple 2

On répète l'opération décrite à l'exemple 1 à partir de :
- 375 g d'eau désionisée
- 1,3 g de laurylsulfate de sodium
- 1 g de pyrophosphate de sodium, 10 H₂0 dans 2 g d'eau
- 2,5 g d'acrylamide
- 50 g puis 447 g d'un mélange constitué de
   . 36,5 parties en poids de styrène
   . 60 parties en poids d'acrylate de butyle
   . 3 parties en poids d'acide acrylique
- 4,3 g de persulfate de potassium dans 103 g d'eau
- 5 g de tri(phényl-1 éthyl) phénol éthoxylé à 16 motifs d'oxyde d'éthylène, dilué dans 10 g d'eau.

On obtient ainsi un latex présentant les caractéristiques suivantes :
- taux d'extrait sec 50 % environ
- pH 3 environ
- viscosité Brookfield 270 mPa.s
- diamètre des particules 0,14 µm
- taux de grains 135 ppm.
- taux de croûtes sur les parois 500 ppm.

Si l'on répète l'opération ci-dessus décrite en remplaçant le tri(phényl-1 éthyl) phénol éthoxylé à 16 OE par la même quantité de nonylphénol éthoxylé à 9 OE de HLB voisin, on constate que le taux de grains est de 730 ppm.

### Exemple 3

On répète l'opération décrite à l'exemple 1 dans un autoclave de 4 litres à partir de :
- 1200 g d'eau désionisée
- 4 g de laurylsulfate de sodium
- 3,2 g de pyrophosphate de sodium, 10 H₂0 dans 5 g d'eau
- 8 g d'acrylamide
- 240 g puis 1352 g d'un mélange constitué de
   . 40 parties en poids d'acrylate de butyle
   . 3 parties en poids d'acide acrylique
   . 20 parties en poids de méthacrylate de méthyle
   . 36,5 parties en poids de styrène
- 13,6 g de persulfate de potassium dans 320 g d'eau
- 16 g de tri(phényl-1 éthyl) phénol éthoxylé à 20 motifs d'oxyde d'éthylène, dilué dans 16 g d'eau.

On obtient ainsi un latex présentant les caractéristiques suivantes :
- taux d'extrait sec 51 % environ
- pH 3 environ
- viscosité Brookfield 78 mPa.s
- diamètre des particules 0,12 µm
- taux de grains 146 ppm.
- taux de croûtes sur les parois 320 ppm.

### Exemple 4

On introduit dans un réacteur de 4 litres :
- 1200 g d'eau désionisée
- 4 g de laurylsulfate de sodium
- 37,6 g de pyrophosphate de sodium, 10 H₂0
- 24 g d'acrylamide
- 240 g d'un mélange constitué de
   . 48,75 parties en poids de styrène
   . 49,75 parties en poids d'acrylate de butyle
- 13,6 g de persulfate de potassium dans 300 g d'eau

Le mélange est porté en 1 heure à 75°C puis on commence à ajouter en continu pendant 5 heures à 75°C, à débit constant, 1336 g d'un mélange constitué de :
. 48,75 parties en poids de styrène
. 49,75 parties en poids d'acrylate de butyle

Une heure après le début de la polymérisation à 75°C, on introduit 16 g de tri(phényl-1 éthyl) phénol éthoxylé à 16 motifs d'oxyde d'éthylène (16 OE) dilué dans 16 g d'eau.

A la fin de l'introduction du mélange de monomères, on ajoute en 1 heure un mélange de persulfate de potassium (3,2 g) et de pyrophosphate de potassium, 10H₂O (2,7 g) dans 100 g d'eau. Le réacteur est ensuite maintenu 1 heure à 75°C puis refroidi à la température ordinaire.

On obtient ainsi un latex présentant les caractéristiques suivantes :
- taux d'extrait sec 50 % environ
- pH 7 environ
- viscosité Brookfield 600 mPa.s
- diamètre des particules 0,16 µm
- taux de grains 0 ppm
- taux de croûtes sur les parois : 248 ppm

### Exemple 5

On répète l'opération décrite à l'exemple 4 en remplaçannt le tri(phényl-1 éthyl) phénol éthoxylé à 16 OE par 16 g de tri(phényl-1 éthyl) phénol éthoxylé à 16 OE et sulfaté (sel d'ammonium 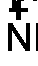 H₄) dans 64 g d'eau.

Les caractéristiques du latex obtenu sont les suivantes :
- taux d'extrait sec 49 % environ
- pH 7 environ
- viscosité Brookfield 768 mPa.s
- diamètre des particules 0,19 µm
- taux de grains 280 ppm
- taux de croûtes sur les parois : 107 ppm.

### Exemple 6

On répète l'opération décrite à l'exemple 4 en remplaçannt le tri(phényl-1 éthyl) phénol éthoxylé à 16 OE par 16 g de di(phényl-1 éthyl) phénol éthoxylé à 7 OE et sulfaté (sel d'ammonium 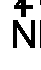 H₄) dans 34 g d'eau.

Les caractéristiques du latex obtenu sont les suivantes :
- taux d'extrait sec 49 % environ
- pH 7 environ
- viscosité Brookfield 264 mPa.s
- diamètre des particules 0,15 µm
- taux de grains 100 ppm
- taux de croûtes sur les parois : 0 ppm.

### Exemple 7

On répète l'opération décrite à l'exemple 4 en remplaçannt le tri(phényl-1 éthyl) phénol éthoxylé à 16 OE par 16 g de di(phényl-1 éthyl) phénol éthoxylé à 11 OE et sulfaté (sel d'ammonium 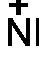 H₄) dans 34 g d'eau.

Les caractéristiques du latex obtenu sont les suivantes :
- taux d'extrait sec 49 % environ
- pH 7 environ
- viscosité Brookfield 192 mPa.s
- diamètre des particules 0,16 µm
- taux de grains 15 ppm
- taux de croûtes sur les parois : 0 ppm.

## Revendications

1. Procédé de polymérisation en émulsion d'au moins un monomère vinylique non ionogène en présence d'un émulsifiant et d'un amorceur de polymérisation, caractérisé en ce que ledit agent émulsifiant contient un composé non-ionique ou anionique de formule : 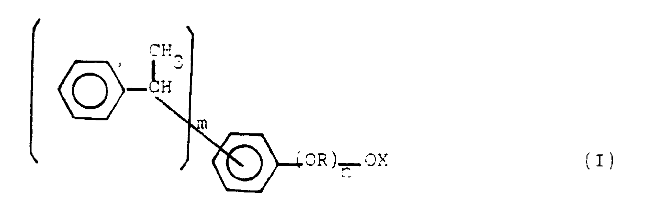 où m est égal à 2 ou 3
- n va de 6 à 50
- R est un radical éthylène et/ou propylène
- X représente :
. un atome d'hydrogène
. un groupe - SO₃M, où le symbole M est un reste ammonium ou un atome de métal alcalin.

2. Procédé selon la revendication 1 caractérisé en ce que :
- m est égal à 2 ou 3
- n va de 7 à 16
- R est un radical éthylène
- M est un reste ammonium.

3. Procédé selon la revendication 1 ou 2 caractérisé en ce que l'émulsifiant de formule I est mis en oeuvre en quantité allant de 0,3 à 2 % en poids par rapport au poids de monomère(s).

4. Procédé selon l'une quelconque des revendications 1 à 3 caractérisé en ce que l'émulsifiant de formule I est accompagné d'au moins un agent émulsifiant compatible anionique, cationique, non-ionique ou amphotère.

5. Procédé selon la revendication 4 caractérisé en ce que la quantité totale d'émulsifiants mise en oeuvre est de l'ordre de 0,4 à 4 % en poids par rapport au poids de monomère(s).

6. Procédé selon l'une quelconque des revendications précédentes caractérisé en ce que la composition monomère à polymériser contient en outre
- jusqu'à 50 % de son poids d'au moins un monomère ionogène
- et/ou de 0 à 10 % de son poids d'un monomère réticulant.

7. Procédé selon l'une quelconque des revendications précédentes caractérisé en ce que l'opération de polymérisation est réalisée à une température de l'ordre de 60 à 90°C en présence de 0,1 à 5 % en poids d'amorceur de polymérisation par rapport au poids de monomère(s).

## Patentansprüche

1. Verfahren zur Emulsionspolymerisation zumindest eines nicht-ionogenen vinylischen Monomeren in Gegenwart eines Emulgiermittels und eines Polymerisationsinitiators, dadurch gekennzeichnet, daß das Emulgiermittel eine nicht-ionische oder anionische Verbindung der Formel 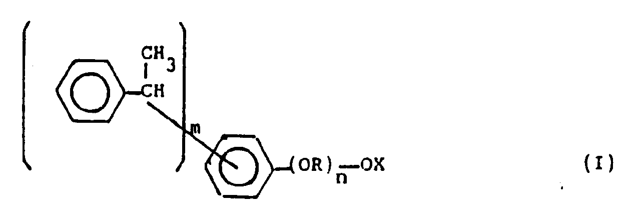 enthält, worin
m für 2 oder 3 steht,
n von 6 bis 50 reicht,
R ein Ethylen- und/oder Propylenrest ist und
X bedeutet: ein Wasserstoffatom,
eine Gruppe -SO₃M, worin das Symbol M für einen Ammoniumrest oder ein Alkalimetallatom steht.

2. Verfahren gemäß Anspruch 1, dadurch gekennzeichnet daß
m für 2 oder 3 steht,
n von 7 bis 16 reicht,
R ein Ethylenrest ist und
M ein Ammoniumrest ist.

3. Verfahren gemäß Anspruch 1 oder 2, dadurch gekennzeichnet, daß das Emulgiermittel der Formel I in einer Menge eingesetzt wird, die von 0,3 bis 2 Gew.%, bezogen auf das Gewicht des bzw. der Monomeren, reicht.

4. Verfahren gemäß einem der Ansprüche 1 bis 3, dadurch gekennzeichnet, daß das Emulgiermittel der Formel I von zumindest einem verträglichen anionischen, kationischen, nichtionischen oder amphoteren Emulgiermittel begleitet ist.

5. Verfahren gemäß Anspruch 4, dadurch gekennzeichnet, daß die eingesetzte Gesamtmenge an Emulgiermitteln in der Größenordnung von 0,4 bis 4 Gew.%, bezogen auf das Gewicht des bzw. der Monomeren, beträgt.

6. Verfahren gemäß einem der vorhergehenden Ansprüche, dadurch gekennzeichnet, daß die zu polymerisierende Monomerenzusammensetzung außerdem enthält:
- bis zu 50% ihres Gewichts zumindest eines ionogenen Monomeren
- und/oder 0 bis 10% ihres Gewichts eines vernetzenden Monomeren.

7. Verfahren gemäß einem der vorhergehenden Ansprüche, dadurch gekennzeichnet, daß das Polymerisationsverfahren bei einer Temperatur in der Größenordnung von 60 bis 90°C in Gegenwart von 0,1 bis 5 Gew.% Polymerisationsinitiator, bezogen auf das Gewicht des bzw. der Monomeren, durchgeführt wird.

## Claims

1. Process for the emulsion polymerisation of at least one nonionic vinyl monomer in the presence of an emulsifier and of a polymerisation initiator, characterised in that the said emulsifying agent contains a nonionic or anionic compound of formula: 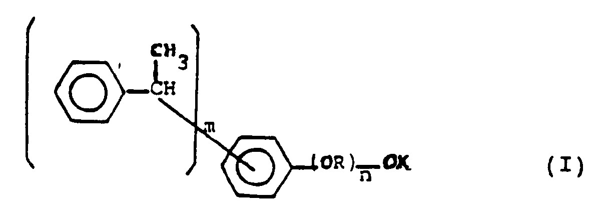 where m is 2 or 3
- n ranges from 6 to 50
- R is an ethylene and/or propylene radical, and
- X represents:
. a hydrogen atom or
. a group -SO₃M, where the symbol M is an ammonium radical or an alkali metal atom.

2. Process according to Claim 1, characterised in that:
- m is 2 or 3,
- n ranges from 7 to 16,
- R is an ethylene radical, and
- M is an ammonium radical.

3. Process according to Claim 1 or 2, characterised in that the emulsifier of formula I is used in an amount ranging from 0.3 to 2 % by weight with respect to the weight of the monomer(s).

4. Process according to any one of Claims 1 to 3, characterised in that the emulsifier of formula I is accompanied by at least one compatible anionic, cationic, nonionic or amphoteric emulsifying agent.

5. Process according to Claim 4, characterised in that the total amount of emulsifiers used is of the order of 0.4 to 4 % by weight with respect to the weight of monomer(s).

6. Process according to any one of the preceding claims, characterised in that the monomer composition to be polymerised also comprises
- up to 50 % of it weight of at least one ionic monomer
- and/or from 0 to 10 % of its weight of a crosslinking monomer.

7. Process according to any one of the preceding claims, characterised in that the polymerisation operation is carried out at a temperature of the order of 60 to 90°C in the presence of 0.1 to 5 % by weight of polymerisation initiator with respect to the weight of monomer(s).
